# EUROPEAN PATENT SPECIFICATION

(11) **EP 1 739 323 B1**
(45) Date of publication and mention of the grant of the patent: **20.01.2010**
(21) Application number: 06012048.2
(22) Date of filing: 12.06.2006
(51) Int. Cl.: F16F 15/26

(54) **Balancer device for an engine**
Ausgleichsvorrichtung für eine Brennkraftmaschine
Dispositif d'équilibrage pour un moteur à combustion

(30) Priority: 27.06.2005 JP 2005187068
(43) Date of publication of application: 03.01.2007
(73) Proprietor: AISIN SEIKI KABUSHIKI KAISHA, Kariya-shi, Aichi-ken 448-8650 (JP); TOYOTA JIDOSHA KABUSHIKI KAISHA, Toyota-shi, Aichi-ken, 471-8571 (JP)
(72) Inventor: Miura, Yasushi, Kariya-shi, Aichi-ken, 448-8650 (JP); Honda, Mamoru, Kariya-shi, Aichi-ken, 448-8650 (JP); Kobayashi, Hironori, Kariya Aichi-ken 448-8605 (JP); Hamamura, Yoshihiko, Toyota-shi Aichi-ken 471-8571 (JP)
(74) Representative: Kramer - Barske - Schmidtchen

(56) References cited:
- EP-A- 1 484 488
- EP-A2- 0 640 776
- EP-A2- 0 979 957
- GB-A- 2 100 800

## Description

### FIELD OF THE INVENTION

This invention relates to a balancer device for an engine.

### BACKGROUND

Generally, in a four-cylindered engine, because of a second-order inertial force generated by an up and down reciprocating operation of a piston, or the like, an imbalance of a rotation of a crankshaft is generated. Further, because of this imbalance, an up and down vibration of an engine is generated. Therefore, an engine is conventionally provided with a balancer device for restricting the vibration of the engine.

The balancer device is configured so that two balancer shafts, to which a balancer weight is eccentrically provided, are rotatably supported at a housing placed in an oil pan below a cylinder block. Further, the balancer shafts are covered by the housing for preventing from contacting with oil stored in the oil pan and flowed from the cylinder block. The balancer device restricts the vibration of the engine by rotating two balancer shafts in a direction opposite from each other by means of a rotational force of the crankshaft.

The balancer shaft is rotatably supported by plural bearings formed at the housing. Further, because the balancer shaft is rotated at a speed about twice the speed of the crankshaft, each axial center of the plural bearings is necessarily leveled with each other in order to smoothly rotate the balancer shaft, and thus a higher processing accuracy is required. The housing includes a pair of housing members (an upper housing member and a lower housing member), a divided surface of each housing member is in contact with each other, for providing a housing portion in which a gear is housed. The gear transmits a rotation of the balancer shaft and the crankshaft. The bearings are machined from the outside of the pair of housing members by means of a drill gear, or the like. Therefore, an opening for machining process is formed at a rear end surface of the housing.

The balancer device is provided in the oil pan below the cylinder block. Therefore, the oil stored in the oil pan is flowed into the housing through the opening. Further, the oil in the housing is agitated by the balancer weight and the oil may be bubbled (air entrainment). If bubbled oil is fed back to the oil pan and is then supplied to each part of the engine from the oil pan, it may cause a poor lubrication of the engine. Further, the oil in the housing increases a rotational resistance of the balancer shaft and may cause a deterioration of an engine friction. For reasons mentioned above, JP348872B (see column [0014], and Fig. 3) discloses a balancer device, which closes the opening by means of a plug made of synthetic resin.

However, because the balancer device disclosed in JP348872B requires the plug for closing the opening, a manufacturing step of the balancer device may be increased. Further, because the plug may loosen and fall off from the opening with time due to the vibration of the engine, or the like, the disclosed balancer device may occasionally fail to reduce the poor lubrication of the engine or the deterioration of the engine friction over a long period of time in a stable manner.

EP 1 484 488 A1 discloses a balancer device according to the preamble of claim 1.

A need thus exists to provide the balancer device which can reduce the oil flowing into the housing without providing the separated member, such as the plug for closing the opening, and which can restrict an increase of the manufacturing step, the deterioration of the engine friction, and the poor lubrication of the engine because of the bubbled oil.

### SUMMARY OF THE INVENTION

According to an aspect of the present invention, a balancer device for an engine includes a housing assembled in an oil pan below a cylinder block, a pair of balancer shafts arranged in parallel with each other and each rotatably supported by means of at least a pair of bearing members provided in the housing, a rotational force of a crankshaft, being transmitted to one of the pair of balancer shafts, a pair of balancer weights, one of the balancer weights being provided at one of the balancer shafts and the other one of the balancer weights being provided at the other one of the balancer shaft, each balancer weight being eccentrically provided at an outer circumferential surface of the corresponding balancer shaft and rotatable with the corresponding balancer shaft in a weight chamber formed in the housing, each balancer weight being arranged between the pair of bearing members, and a pair of gears, one of the gears being provided at one of the balancer shafts and the other one of the gears being provided at the other one of the balancer shafts, the pair of gears meshing with each other by the rotational force of the crankshaft in such a manner that the balancer shafts rotate in opposite directions in a gear chamber formed in the housing. The housing is divided into a first housing member and a second housing member at a surface along an axis of the balancer shaft. The housing is formed with one through hole per balancer shaft at a side wall of the weight chamber at a side opposite to the gear chamber relative to the pair of bearing members, the through hole being provided coaxially with the axis of the balancer shaft and penetrating through the side wall along the axis of the balancer shaft, and an end portion of the balancer shaft extends into the through hole along the axis of the balancer shaft to restrict a fluid communicating therethrough.
According to the present invention, the balancer device can be provided, which can reduce the oil flowing into the housing without providing the separated member such as the plug for closing the opening, and can restrict an increase of the manufacturing step, the deterioration of the engine friction, and the poor lubrication of the engine because of the bubbled oil.

### BRIEF DESCRIPTION OF THE DRAWINGS

The foregoing and additional features and characteristics of the present invention will become more apparent from the following detailed description considered with reference to the accompanying drawings, wherein:

Fig. 1 is a front view of an engine according to an embodiment of the present invention.

Fig. 2 is a sectional side view of a balancer device.

Fig. 3 is a rear view of the balancer device.

### DETAILED DESCRIPTION

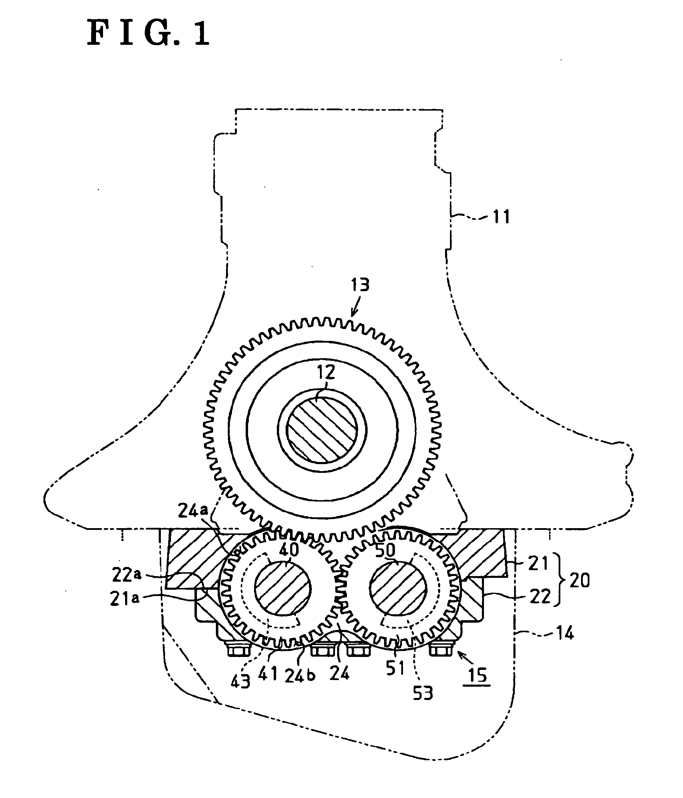

An embodiment of the present invention will be explained hereinbelow with reference to the attached drawings. As illustrated in Fig. 1, at a lower portion of a cylinder block 11 of an engine 100, a crankshaft 12 serving as an output shaft of the engine 100 is rotatably supported about an axis line of the crankshaft 12. A piston (not shown) is connected to the crankshaft 12 through a connecting rod (not shown). While the engine is in motion, a reciprocating movement of the piston, in an up and down direction in Fig. 1, is converted to a rotation of the crankshaft 12 through the connecting rod. Further, a drive gear 13 is fixed to the crankshaft 12 and is integrally rotatable therewith.

At a lower end portion of the cylinder block 11, an oil pan 14 for storing oil is fixed. Further, below the cylinder block 11, a balancer device 15 for counteracting an inertial force of the piston, the inertial force applying in a movement direction of the piston during the engine driving, is fixed in the oil pan 14. An oil pump (not shown) is assembled to the cylinder block 11. The oil pump is activated by means of the engine 100 for pumping the oil in the oil pan 14 to each part of the engine 100 to be lubricated, and some of the oil from the oil pump is also supplied to the balancer device 15 as described below.

The balancer device 15 includes a housing 20, a first balancer shaft 40, and a second balancer shaft 50. The housing 20 includes a first housing member 21 and a second housing member 22. The first housing member 21 and the second housing member 22 made of aluminum alloy, cast iron, or the like, are connected with each other by means of plural bolts 23 in such a manner that divided surfaces 21a and 22a thereof are in close contact with each other. The housing 20 is fixed to the cylinder block 11 by means of plural bolts 16.

The first balancer shaft 40 and the second balancer shaft 50 are rotatably housed between the first housing member 21 and the second housing member 22. A first driven gear 41 is fixed to the first balancer shaft 40 and a second driven gear 51 is fixed to the second balancer shaft 50. The first driven gear 41 and the second driven gear 51 are mutually meshed and are provided with same number of gear teeth. Thereby, the first balancer shaft 40 and the second balancer shaft 50 mutually rotate in a direction opposite from each other at equal speed.

The first driven gear 41 meshes with the drive gear 13 and the number of gear teeth of the drive gear 13 and the first driven gear 41 is set at a rate of 2:1. Therefore, the balancer shafts 40 and 50 rotate at a speed about twice the speed of the crankshaft 12. Alternatively, or in addition, a chain drive system or a belt drive system may be used for transmitting the rotation of the crankshaft 12 to each one of the balancer shafts 40 and 50.

The first balancer shaft 40 includes a balancer weight 43 and the second balancer shaft 50 includes a balancer weight 53. The balancer weights 43 and 53 are formed into a substantial half circle and are eccentrically provided relative to an axial line of the balancer shafts 40 and 50, respectively. Accordingly, by rotating the balancer shafts 40 and 50 having an eccentric barycentric position relative to a rotational center thereof, the balancer device 15 restricts an up and down vibration of the engine and a sound caused by a second-order inertial force of the engine 100. Alternatively, or in addition, the balancer weights 43 and 53 may be separately formed from the balancer shafts 40 and 50, and may be connected to the balancer shafts 40 and 50 by means of a bolt, or the like, in such a manner to be integrally rotatable therewith.

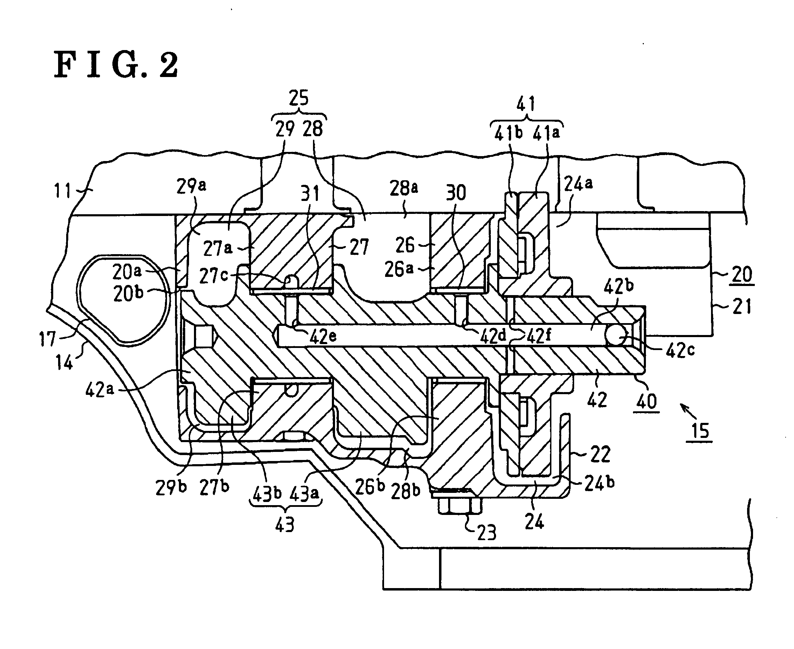

With reference to Fig. 2, the housing 20 and the first balancer shaft 40 are explained hereinafter. Because the structure of the second balancer shaft 50 and the housing 20 related to the balancer shaft 50 is similar to the structure of the first balancer shaft 40 and the housing 20 related to the first balancer shaft 40, drawing and explanation for the second balancer shaft 50 and the housing 20 related to the second balancer shaft 50 are omitted.

As illustrated in Fig. 2, the housing 20 includes a gear chamber 24 in which the first driven gear 41 is provided and a weight chamber 25 in which the balancer weight 43 is provided. The gear chamber 24 and the weight chamber 25 are separated by means of a first bearing member 26 which rotatably supports the first balancer shaft 40. Further, the weight chamber 25 is divided into a first weight chamber 28 and a second weight chamber 29 by means of a second bearing member 27 which rotatably supports the first balancer shaft 40.

A concave portion 24a is provided in the first housing member 21 and a concave portion 24b is provided in the second housing member 22. The concave portions 24a and 24b facing with each other form the gear chamber 24. Further, a concave portion 28a is provided in the first housing member 21 and a concave portion 28b is provided in the second housing member 22. The concave portions 28a and 28b facing with each other form the first weight chamber 28. Moreover, a concave portion 29a is provided in the first housing member 21 and a concave portion 29b is provided in the second housing member 22. The concave portions 29a and 29b facing with each other form the second weight chamber 29.

Each concave portion 24a, 28a, and 29a of the first housing member 21 is separated by means of a bearing portion 26a of the first bearing member 26 and a bearing portion 27a of the second bearing member 27. Further, each concave portion 24b, 28b, and 29b of the second housing member 22 is separated by means of a bearing portion 26b of the first bearing member 26 and a bearing portion 27b of the second bearing member 27.

The first balancer shaft 40 includes a rotational shaft 42 and the balancer weight 43. The rotational shaft 42 is formed into a substantial column and is rotatably supported by means of the first bearing member 26 and the second bearing member 27. The first driven gear 41 is fixed to the rotational shaft 42 and is integrally rotatable therewith.

A first bearing 30 is provided between the rotational shaft 42 and the first bearing member 26, and a second bearing 31 is provided between the rotational shaft 42 and the second bearing member 27. The first bearing 30 as well as the second bearing 31 is made of two substantially half cylindrical metal bearings by forming the two half cylindrical metal bearings into a substantial cylinder. The first bearing 30 and the second bearing 31 are applied with oil and the bearings 30 and 31 are thereby well lubricated.

The balancer weight 43 includes a first balancer weight 43a and a second balancer weight 43b. The first balancer weight 43a and the second balancer weight 43b include a substantial columnar shape and are integrally formed with the rotational shaft 42. The first balancer weight 43a is provided in the first weight chamber 28 and is rotatable therein. The second balancer weight 43b is provided in the second weight chamber 29 and is rotatable therein.

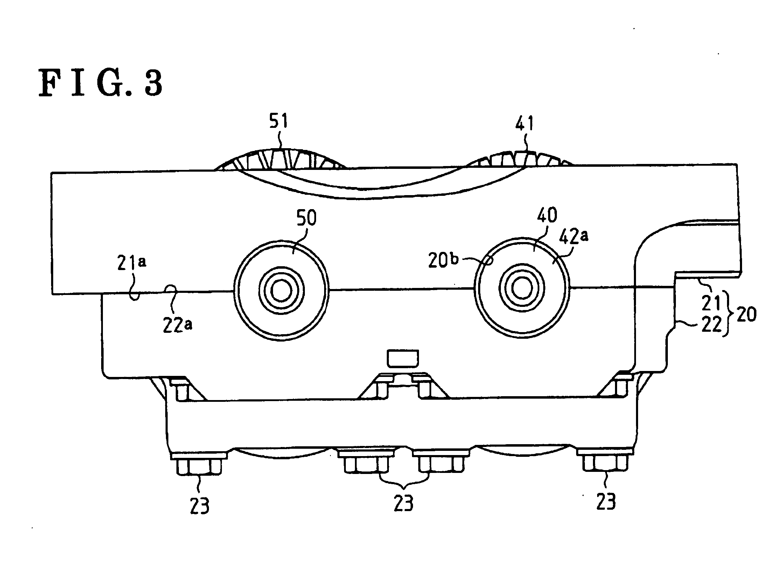

The housing 20 includes a side wall 20a, by which the second weight chamber 29 and an exterior part of the housing 20 is separated, at a side opposite to the gear chamber 24. At the side wall 20a, a working space 20b (i.e., a through hole) penetrating through the side wall 20a is formed for accurately forming the first bearing member 26 and the second bearing member 27. As illustrated in Fig. 3, the working space 20b includes an inner diameter into which a tool (e.g., a drill) is insertable for processing the first bearing member 26 and the second bearing member 27. In order to process the bearing members 26 and 27 with high accuracy, the tool may necessarily be moved along an axial direction thereof at low feeding speed. Therefore, by making the inner diameter of the working space 20b larger than an outer diameter of the tool, the tool can be moved to the second bearing member 27 faster than a processing speed, and a time required for processing can be reduced relative to a condition in which the tool is moved to the second bearing member 27 at the processing speed.

In a condition where the first housing member 21 and the second housing member 22 of the housing 20 are supported in such a manner that the divided surfaces 21 a and 22 are closely in contact with each other, the first bearing member 26 and the second bearing member 27 are processed by means of the tool inserted from the working space 20b, and an inner circumferential surface (i.e., an inner circumferential surface at which the first bearing 30 and the second bearing 31 are provided) is formed which rotatably supports the rotational shaft 42. More specifically, the tool cuts a wall portion of the first housing member 21 and the second housing member 22 into a substantial half columnar shape and forms the first bearing member 26 and the second bearing member 27. Accordingly, a center of the first bearing member 26 is placed at a same level as a center of the second bearing member 27. Then, the first housing member 21 and the second housing member 22 are separated and the first balancer shaft 40 to which the first driven gear 41 is fixed and the second balancer shaft 50 to which the second driven gear 51 is fixed are housed in the housing 20.

The rotational shaft 42 includes an end portion 42a protruding toward the side wall 20a further than an end surface of the second balancer weight 43b, and the end portion 42a approximately closes the working space 20b. The housing 20 is fixed and the end portion 42a of the rotational shaft 42 is rotated. Therefore, a space is provided between the working space 20b and the end portion 42a of the rotational shaft 42. More specifically, the inner diameter of the working space 20b and an outer diameter of the end portion 42a is set in such a manner that the end portion 42a is not in contact with the working space 20b because of a bending of the balancer shaft 40 caused by a rotation of the rotational shaft (first balancer shaft 40) and the balancer weight 43 described below. Further, the space between the working space 20b and the end portion 42a of the rotational shaft 42 is provided in such a manner that the oil is not easily flowed into the second weight chamber 29 from the space. Because the oil includes an appropriate viscosity, the oil is not easily flowed through the space relative to liquid with a lower viscosity such as water, or the like. Accordingly, the rotational shaft 42 restricts the oil flowing into the housing 20 from the working space 20b by means of the end portion 42a.

The rotational shaft 42 includes, at an axial center thereof, a passage 42b extending in an axial direction of the rotational shaft 42. The passage 42b includes, at an end portion thereof, an opening which is closed by means of a ball 42c. The rotational shaft 42 further includes passages 42d and 42e extending in a radial direction of the rotational shaft 42 for communicating a space between an inner circumferential surface of the bearings 30 and 31 and an outer circumferential surface of the first balancer shaft 40 with the passage 42b. The second bearing member 27 of the housing 20 is formed with an oil supply passage 27c by which some of the oil pumped to the cylinder block 11 from the oil pump (not shown) is supplied to the second bearing 31. Accordingly, the oil from the oil pump is supplied to the first bearing 30 through the oil supply passage 27c, the second bearing 31, and the passages 42e, 42b, and 42d, and the bearings 30 and 31 are thereby well lubricated.

The first balancer shaft 40 includes a passage 42f extending in the radial direction of the rotational shaft 42 for communicating a space between the first driven gear 41 and an outer circumferential surface of the first balancer shaft 40 with the passage 42b. The oil is supplied to the first driven gear 41 from the passage 42b through the passage 42f. The first driven gear 41 is a scissors gear including a first gear 41a and a second gear 41b. The oil is supplied between the first gear 41a and the second gear 41b.

The oil, supplied to the bearings 30 and 31, is stored in the weight chamber 25. The oil, stored in the weight chamber 25, is discharged to the exterior part of the housing 20 from an oil discharging opening (not shown) formed at the housing 20.

In case the number of bearings supporting the rotational shaft is increased, the balancer shaft may be lengthened and the balancer device may thereby grow in size. In consequence, the balancer device may interfere with other components provided in the oil pan 14. According to the embodiment of the present invention, an oil strainer 17 is provided next to the balancer device 15 in the oil pan 14. In order to prevent the balancer device 15 from contacting with the component such as the oil strainer 17, the balancer device 15 according to the embodiment of the present invention supports the first balancer shaft 40 by means of two bearing members 26 and 27.

Further, the balancer shaft includes the balancer weight for restricting the vibration of the engine. More particularly, the barycentric position of the balancer shaft is eccentrically provided from the rotational center of the balancer shaft. Therefore, the balancer shaft may be bent and a degree of a bending of the balancer shaft corresponds to a distance between adjacent bearing members provided in an axial direction of the balancer shaft. More specifically, when the distance between the adjacent bearing members is increased, the degree of the bending of the balancer shaft is increased. Further, the bending of the balancer shaft may occasionally generate a wear or a sound of the bearing member (a metal bearing member).

With the configuration of the balancer device 15, according to the embodiment of the present invention, the first bearing member 26 is provided between the first driven gear 41 and the balancer weight 43, and the second bearing member 27 is provided at an inner side (a first driven gear 41 side) relative to the end portion 42a of the rotational shaft 42. Further, the first balancer weight 43a of the balancer weight 43 is provided between the first bearing member 26 and the second bearing member 27, and a second balancer weight 43b of the balancer weight 43 is provided between the second bearing member 27 and the end portion 42a of the rotational shaft 42. With such configuration, the degree of the bending of the first balancer shaft 40 can be reduced, and generation of the wear or the sound of the bearing members can be reduced.

According to the embodiment of the present invention, the side wall 20a of the housing 20 is formed with the working space 20b. The working space 20b is provided about an axis of the first balancer shaft 40 and is penetrating through the side wall 20a along the axis of the first balancer shaft 40. The first balancer shaft 40 includes the rotational shaft 42 and the balancer weight 43, and the end portion 42a of the rotational shaft 42 is protruded along the rotational shaft 42 and closes the working space 20b leaving some space between the end portion 42a and the working space 20b. Accordingly, because of the end portion 42a of the rotational shaft 42, an amount of the oil to be flowed into the housing 20 is reduced. Therefore, the working space 20b is not necessarily closed by means of a separated member such as a plug, or the like, and a manufacturing step can be reduced. Further, because the oil does not easily flow into the weight chamber 25 of the housing 20, a deterioration of an engine friction caused by the oil in the weight chamber 25 can be restricted. Moreover, an agitation of the oil in the weight chamber 25 is reduced, bubble in the oil is reduced, and a poor lubrication of each parts of the engine 100 to be supplied with the oil can thereby be lowered. Because the separated member such as the plug is not used, there is no possibility of loosening or falling of the separated member. Therefore, the deterioration of the engine friction or the poor lubrication of the engine can be restricted over a long period of time, and a lowering of usability of the balancer device can thereby be restricted.

According to the embodiment of the present invention, because the first balancer shaft 40 includes the second balancer weight 43b at a side of the end portion 42a relative to the second bearing member 27, the bending of the first balancer shaft 40 can be reduced relative to a condition in which the balancer shaft is supported at an end portion thereof. Accordingly, generation of the wear or the sound of the bearing member can be reduced.

According to the embodiment of the present invention, because the center of the first bearing member 26 is placed at a same level as the center of the second bearing member 27, the rotation of the first balancer shaft 40 can be smoothed. Further, because the inner diameter of the working space 20b is larger than an inner diameter of the first bearing member 26 and the second bearing member 27, the tool can promptly be moved to the second bearing member 27. Accordingly, the time required for processing can be reduced relative to a condition in which the tool is moved to the second bearing member 27 at the processing speed.

According to the embodiment of the present invention, the working space 20b is formed at the side wall 20a placed at a side opposite to the first driven gear 41. A length of the tool inserted from the side wall 20a for processing the first bearing member 26 of the first driven gear 41 is shorter than a length of the tool inserted from a first driven gear 41 side for processing the second bearing member 27. Accordingly, an end portion of the tool can be stabilized and the first bearing member 26 and the second bearing member 27 can be accurately processed.

According to the embodiment of the present invention, the first balancer shaft 40 is rotatably supported by two bearing members 26 and 27. However, the present invention is not limited thereto. Alternatively, or in addition, the balancer shaft may be supported by more than two bearing members.

According to claim 1 of the present invention, because the balancer shaft includes the balancer weight at a side of an end, thereof relative to the bearing member, the bending of the balancer shaft can be reduced relative to a condition in which the balancer shaft is supported at the end thereof. Further, the side wall of the housing is formed with the through hole. The through hole is provided about the axis of the balancer shaft and is penetrating through the side wall along the axis of the balancer shaft. The working space is approximately closed by means of the end portion of the balancer shaft protruding along the balancer shaft. Therefore, the end portion of the balancer shaft reduces the amount of the oil to be flowed into the housing through the through hole. Because the through hole is not necessarily closed by means of the separated member such as the plug, or the like, an increase of the manufacturing step can be restricted. Further, because the separated member such as the plug is not used, there is no possibility of loosening or falling of the separated member because of the vibration of the engine. Therefore, the poor lubrication of the engine or the deterioration of the engine friction can be restricted over a long period of time.

According to claim 2 of the present invention, the bearing members are processed by means of the tool inserted through the through hole in such a manner that the center of each bearing member is leveled with each other. Further, because the tool moves to the bearing member promptly, the time required for processing can be reduced.

According to the present invention, the balancer device can be provided, which can reduce the oil flowing into the housing without providing the separated member such as the plug for closing the opening, and can restrict an increase of the manufacturing step, the deterioration of the engine friction, and the poor lubrication of the engine because of the bubbled oil.

## Claims

1. A balancer device (15) for an engine comprising:
a housing (20) assembled in an oil pan (14) below a cylinder block (11);
a pair of balancer shafts (40, 50) arranged in parallel with each other and each rotatably supported by means of at least a pair of bearing members (26, 27) provided in the housing, a rotational force of a crankshaft (12) being transmitted to one of the pair of balancer shafts;
a pair of balancer weights (43, 53), one of the balancer weights (43) being provided at one of the balancer shafts (40) and the other one of the balancer weights (53) being provided at the other one of the balancer shafts (50), each balancer weight being eccentrically provided at an outer circumferential surface of the corresponding balancer shaft and rotatable with the corresponding balancer shaft in a weight chamber (25) formed in the housing, each balancer weight (43, 53)being arranged between the pair of bearing members (26, 27); and
a pair of gears (41, 51), one of the gears (41) being provided at one of the balancer shafts (40) and the other one of the gears (51) being provided at the other one of the balancer shafts (50), the pair of gears meshing with each other by the rotational force of the crankshaft in such a manner that the balancer shafts rotate in opposite directions in a gear chamber (24) formed in the housing,
the housing being divided into a first housing member (21) and a second housing member (22) at a surface along an axis of the balancer shaft, **characterized in that**
the housing (20) is formed with one through hole (20b) per balancer shaft at a side wall (20a) of the weight chamber (25) at a side opposite to the gear chamber (24) relative to the pair of bearing members (26, 27), the through hole being provided coaxially with the axis of the balancer shaft and penetrating through the side wall along the axis of the balancer shaft, and
an end portion (42a) of the balancer shaft extends into the through hole along the axis of the balancer shaft to restrict a fluid communicating therethrough.

2. The balancer device of claim 1, **characterized in that** the weight chamber (25) and the gear chamber (24) are separated by means of at least one of the bearing members (26, 27).

3. The balancer device according to claim 1 or 2, wherein the through hole serves as a working space through which a tool for processing the plural bearing members of the at least one pair of bearing members per balancer shaft is inserted.

4. The balancer device according to one of claims 1 to 3, wherein each balancer shaft is provided with a plurality of balancer weights (43a, 43b; 53a, 53b).

5. The balancer device according to any one of claims 1 to 4, wherein the weight chamber (25) is divided into a plurality of weight chambers (28, 29).

6. The balancer device according to any one of claims 1 to 5, wherein the inner diameters of each pair of bearing members are equal.

7. The balancer device according to any one of claims I to 6, wherein the weight chamber is divided by at least one pair of bearing members.

## Patentansprüche

1. Ausgleichsvorrichtung (15) für eine Brennkraftmaschine, enthaltend:
ein Gehäuse (20), das in einer Ölwanne (14) unter einem Zylinderblock (11) montiert ist;
ein Paar von Ausgleichswellen (40, 50), die parallel zueinander und jeweils drehbar gelagert durch zumindest ein Paar von Lagerelementen (26, 27), die in dem Gehäuse vorgesehen sind, angeordnet sind, wobei eine Rotationskraft einer Kurbelwelle (12) an eine des Paars von Ausgleichswellen übertragen wird;
ein Paar von Ausgleichsgewichten (43, 53), wobei eines der Ausgleichsgewichte (43) an einer der Ausgleichswellen (40) und das andere der Ausgleichsgewichte (53) an der anderen der Ausgleichswellen (50) vorgesehen ist, wobei jedes Ausgleichsgewicht exzentrisch an einer Außenumfangsfläche der entsprechenden Ausgleichswelle und drehbar mit der entsprechenden Ausgleichswelle in einer Gewichtskammer (25), die in dem Gehäuse gebildet ist, vorgesehen ist, wobei jedes Ausgleichsgewicht (43, 53) zwischen dem Paar von Lagerelementen (26, 27) angeordnet ist; und
ein Paar von Zahnrädern (41, 51), wobei eines der Zahnräder (41) an einer der Ausgleichswellen (40) und das andere der Zahnräder (51) an der anderen der Ausgleichswellen (50) vorgesehen ist, wobei das Paar von Zahnrädern miteinander durch die Rotationskraft der Kurbelwelle so kämmt, dass die Ausgleichswellen sich in entgegengesetzte Richtungen in einer Getriebekammer (24), die in dem Gehäuse gebildet ist, drehen,
wobei das Gehäuse in ein erstes Gehäuseelement (21) und ein zweites Gehäuseelement (22) an einer Oberfläche entlang einer Achse der Ausgleichswellen geteilt ist,
**dadurch gekennzeichnet, dass**
das Gehäuse (20) mit einem Durchgangsloch (20b) pro Ausgleichswelle an einer Seitenwand (20a) der Gewichtskammer (25) an einer Seite gegenüber zu der Getriebekammer (24) relativ zu dem Paar von Lagerelementen (26, 27) geformt ist, wobei das Durchgangsloch koaxial zu der Achse der Ausgleichswelle vorgesehen ist und durch die Seitenwand entlang der Achse der Ausgleichswelle dringt, und
ein Endbereich (42a) der Ausgleichswelle sich in das Durchgangsloch entlang der Achse der Ausgleichswelle erstreckt, dass eine Fluidverbindung durch das Durchgangsloch eingeschränkt ist.

2. Ausgleichsvorrichtung nach Anspruch 1, **dadurch gekennzeichnet, dass** die Gewichtskammer (25) und die Getriebekammer (24) durch zumindest eines der Lagerelemente (26, 27) getrennt sind.

3. Ausgleichsvorrichtung nach Anspruch 1 oder 2, wobei das Durchgangsloch als ein Arbeitsraum dient, durch den ein Werkzeug zum Bearbeiten der Mehrzahl von Lagerelementen des zumindest einen Paars von Lagerelementen pro Ausgleichswelle eingeführt wird.

4. Ausgleichsvorrichtung nach einem der Ansprüche 1 bis 3, wobei jede Ausgleichswelle mit einer Mehrzahl von Ausgleichsgewichten (43a, 43b; 53a, 53b) versehen ist.

5. Ausgleichsvorrichtung nach einem der Ansprüche 1 bis 4, wobei die Gewichtskammer (25) in eine Mehrzahl von Gewichtskammem (28, 29) geteilt ist.

6. Ausgleichsvorrichtung nach einem der Ansprüche 1 bis 5, wobei die Innendurchmesser von jedem Paar von Lagerelementen gleich sind.

7. Ausgleichsvorrichtung nach einem der Ansprüche 1 bis 6, wobei die Gewichtskammer durch zumindest ein Paar von Lagerelementen geteilt ist.

## Revendications

1. Dispositif d'équilibrage (15) pour un moteur comprenant:
un logement (20) assemblé dans un carter d'huile (14) en dessous d'un bloc-cylindres (11);
une paire d'arbres d'équilibrage (40, 50) agencés en parallèle l'un avec l'autre et supportés chacun à rotation au moyen d'au moins une paire d'éléments de palier (26, 27) placés dans le logement, une force de rotation d'un vilebrequin (12) étant transmise à l'un de la paire d'arbres d'équilibrage;
une paire de poids d'équilibrage (43, 53), l'un des poids d'équilibrage (43) étant prévu sur l'un des arbres d'équilibrage (40) et l'autre des poids d'équilibrage (53) étant prévu sur l'autre des arbres d'équilibrage (50), chaque poids d'équilibrage étant prévu de manière excentrique sur une surface périphérique extérieure de l'arbre d'équilibrage correspondant et pouvant tourner avec l'arbre d'équilibrage correspondant dans une chambre à poids (25) formée dans le logement, chaque poids d'équilibrage (43, 53) étant agencé entre la paire d'éléments de palier (26, 27); et
une paire d'engrenages (41, 51), un des engrenages (41) étant prévu sur l'un des arbres d'équilibrage (40) et l'autre des engrenages (51) étant prévu sur l'autre des arbres d'équilibrage (50), la paire d'engrenage s'engrenant mutuellement par la force de rotation du vilebrequin d'une manière telle que les arbres d'équilibrage tournent dans des directions opposées dans une chambre d'engrenage (24) formée dans le logement,
le logement étant divisé en un premier élément de logement (21) et un deuxième élément de logement (22) sur une surface le long d'un axe de l'arbre d'équilibrage,
**caractérisé en ce que**
le logement (20) est constitué d'un trou débouchant (20b) par arbre d'équilibrage sur une paroi latérale (20a) de la chambre de poids (25) sur un côté opposé à la chambre d'engrenage (24) par rapport à la paire d'éléments de palier (26, 27), le trou débouchant étant prévu coaxialement avec l'axe de l'arbre d'équilibrage et pénétrant à travers la paroi latérale le long de l'axe de l'arbre d'équilibrage, et
une partie d'extrémité (42a) de l'arbre d'équilibrage s'étend dans le trou débouchant le long de l'axe de l'arbre d'équilibrage pour restreindre un fluide communiquant à travers celui-ci.

2. Dispositif d'équilibrage selon la revendication 1, **caractérisé en ce que** la chambre de poids (25) et la chambre d'engrenage (24) sont séparées au moyen d'au moins un des éléments de palier (26, 27).

3. Dispositif d'équilibrage selon la revendication 1 ou 2, dans lequel le trou débouchant sert d'espace de travail à travers lequel un outil de traitement de la pluralité des éléments de palier de la au moins une paire d'éléments de palier par arbre d'équilibrage est inséré.

4. Dispositif d'équilibrage selon l'une des revendications 1 à 3, dans lequel chaque arbre d'équilibrage est équipé d'une pluralité de poids d'équilibrage (43a, 43b; 53a, 53b).

5. Dispositif d'équilibrage selon l'une quelconque des revendications 1 à 4, dans lequel la chambre de poids (25) est divisée en une pluralité de chambres de poids (28, 29).

6. Dispositif d'équilibrage selon l'une quelconque des revendications 1 à 5, dans lequel les diamètres intérieurs de chaque paire d'éléments de palier sont égaux.

7. Dispositif d'équilibrage selon l'une quelconque des revendications 1 à 6, dans lequel la chambre de poids est divisée en au moins une paire d'éléments de palier.
